# FASCICULE DE BREVET EUROPEEN

(11) **EP 0 751 599 B1**
(45) Date de publication et mention de la délivrance du brevet: **27.05.1998**
(21) Numéro de dépôt: 96420214.7
(22) Date de dépôt: 25.06.1996
(51) Int. Cl.: H02G 3/26, F16L 3/24

(54) **Dispositif pour la fixation de consoles horizontales sur un montant vertical à crémaillère**
Vorrichtung zum Befestigen horizontalen Konsolen auf einem vertikalen Ständer mit Zahnstangen
Means for attaching horizontal brackets to a vertical stand with rack and pinion means

(30) Priorité: 27.06.1995 FR 9507957
(43) Date de publication de la demande: 02.01.1997
(73) Titulaire: MAVIL, F-21430 Liernais (FR)
(72) Inventeur: Simon, Bernard, 69300 Caluire (FR)
(74) Mandataire: Monnier, Guy

(56) Documents cités:
- DE-C- 3 606 505
- FR-A- 2 234 503
- US-A- 5 092 546

## Description

La présente invention a trait à un dispositif pour fixer des consoles horizontales sur des montants verticaux pour la mise en place des chemins de câbles ou toutes autres canalisations pour le transport de l'énergie ou de fluides.

On connait des dispositifs de ce genre qui comprennent un montant vertical présentant un profil en forme de C dont les extrémités sont légèrement refermées de manière à constituer une glissière. A l'intérieur de la glissière sont fixées des consoles en forme d'équerre afin que leurs faces horizontales soient perpendiculaires au fond du montant. Les consoles sont retenues par l'intermédiaire de vis qui permettent de les pincer contre le fond du montant et les extrémités du profil en forme de C. Dans certains cas, les consoles peuvent être montées l'une en face de l'autre, c'est-à-dire tête-bêche. Pour cela, le montant vertical présente un profilé en double C dont les bords sont légèrement refermés pour constituer une glissière sur chacune des faces dudit montant.

D'autres dispositifs connus ne nécessitant pas l'emploi de vis et comprenant un montant vertical d'un profil différent sont décrit dans les documents US-A-5 092 546 et DE-C-3 606 505.

De tels dispositifs comportent certains inconvénients en ce qui concernent leur coût de fabrication et leur complexité de montage lors de la fixation des consoles lorsque celles-ci sont disposées dans les glissières du montant en forme de C.

C'est à ces inconvénients qu'entend plus particulièrement remédier la présente invention.

Le dispositif de fixation suivant la présente invention a pour but de permettre une fixation d'au moins une console par encliquetage sur un montant vertical en évitant toute utilisation de vis et d'écrou.

Le dispositif suivant l'invention comporte un montant vertical pourvu d'un fond qui se prolonge perpendiculairement par deux ailes parallèles l'une à l'autre dont les extrémités sont retournées en direction de l'intérieur dudit montant pour constituer des bords à profils courbes délimitant une ouverture continue et verticale, tandis que chaque bord à profil courbe est découpé pour présenter une série d'encoches parallèles formant une crémaillère sur toute la hauteur du montant, et au moins une console horizontale qui comporte des moyens d'encliquetage et de retenue opposés qui coopèrent avec les bords à profils courbes, les encoches et l'ouverture continue pour l'immobilisation de ladite console sur le montant vertical.

Les dessins annexés, donnés à titre d'exemple, permettront de mieux comprendre l'invention, les caractéristiques qu'elle présente et les avantages qu'elle est susceptible de procurer :
Fig. 1 est une vue en perspective éclatée illustrant le dispositif de fixation suivant la présente invention.
Fig. 2 et 3 sont des vues représentant la mise en place des consoles horizontales sur un montant vertical.
Fig. 4 est une vue de dessus illustrant le premier moyen de retenue de la console horizontale sur le montant vertical.
Fig. 5 est une vue de dessus montrant le second moyen de retenue de la console sur le montant vertical.
Fig. 6 est une vue en perspective montrant le dispositif de fixation en position montée.

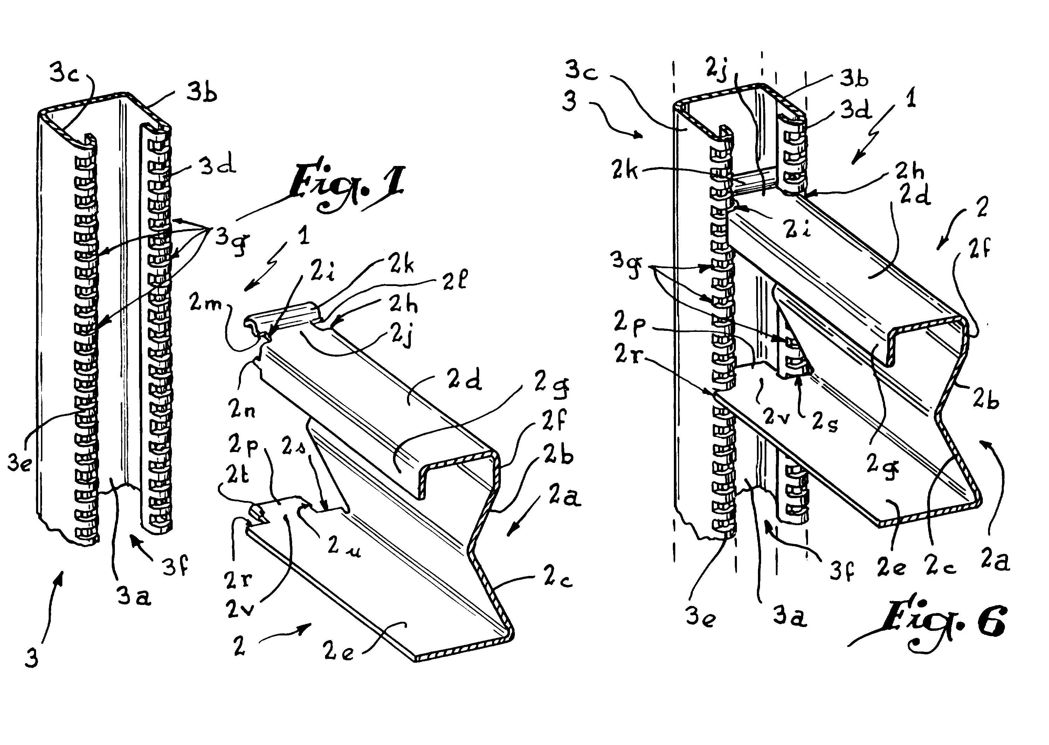

On a représenté en fig. 1 un dispositif 1 permettant la fixation de consoles horizontales 2 sur un montant vertical 3.

La console 2 comporte une face verticale 2a formée de deux pans inclinés 2b et 2c qui se prolongent respectivement par une aile horizontale et parallèle 2d et 2e. L'aile supérieure 2d est reliée au pan incliné 2b par une portion verticale 2f. A l'opposé de la portion 2f et parallèlement à celle-ci, l'aile supérieure 2d se prolonge par un retour 2g qui est dirigé en direction de l'aile inférieure 2e. L'aile supérieure 2d, la portion 2f et le retour 2g sont découpés à l'une des extrémités de la console 2 pour présenter deux échancrures 2h et 2i délimitant une branche horizontale 2i. La branche horizontale ou segment 2j est prévue dans le prolongement de l'aile supérieure 2d et d'une largeur inférieure à celle-ci.

La branche ou segment 2j comporte perpendiculairement à son axe longitudinal une butée à profil courbe 2k ou analogue formant le premier moyen d'encliquetage et de retenue de la console 2. La butée 2k est prévue d'une largeur équivalente à celle de l'aile supérieure 2d pour constituer avec les échancrures 2h et 2i, deux bords d'appui 2l et 2m.

La portion 2f et le retour 2g comportent respectivement dans leur prolongement en direction de la butée courbe 2k et en dessous de celle-ci un doigt de retenue 2n.

L'aile inférieure 2e est découpée pour constituer une patte 2p formant le second moyen d'encliquetage et de retenue de la console 2. La patte 2p se trouve dans le prolongement de l'aile inférieure 2e et dans un même plan horizontal que celle-ci.

La patte 2p présente un profil en forme de T pour constituer avec l'aile inférieure 2e d'une part deux faces d'appui 2r, 2s solidaires de l'aile et d'autre part deux autres faces d'appui 2t et 2u opposées aux deux premières et solidaires de la patte. Les faces d'appui 2r, 2s et 2t, 2u sont respectivement séparées par un segment 2v d'une largeur inférieure à celle de la patte 2p.

Le montant vertical 3 comporte un fond 3a qui se prolonge perpendiculairement par deux ailes 3b et 3c parallèles l'une à l'autre. A l'opposé du fond 3a, les extrémités libres des ailes 3b et 3c sont retournées en direction de l'intérieur du montant 3 pour constituer des bords à profils courbes 3d et 3e. Les bords à profils courbes 3d et 3e de chaque aile 3b et 3c permettent de délimiter sur toute la hauteur du montant 3 une ouverture continue et verticale 3f. Chaque bord 3d et 3e est découpé pour présenter une série d'encoches 3g parallèles les unes aux autres formant une crémaillère sur toute la hauteur du montant 3.

On note que les encoches 3g ménagées sur chacun des bords à profil courbe 3d et 3e débouchent à l'intérieur du pli de ces derniers pour communiquer avec la partie interne du montant 3. La hauteur des encoches 3g est légèrement supérieure à celle de l'épaisseur du profilé formant la console 2 et des doigts de retenue 2n.

On observe que la largeur de l'ouverture continue 3f est inférieure à celle de la butée 2k et de la patte 2p.

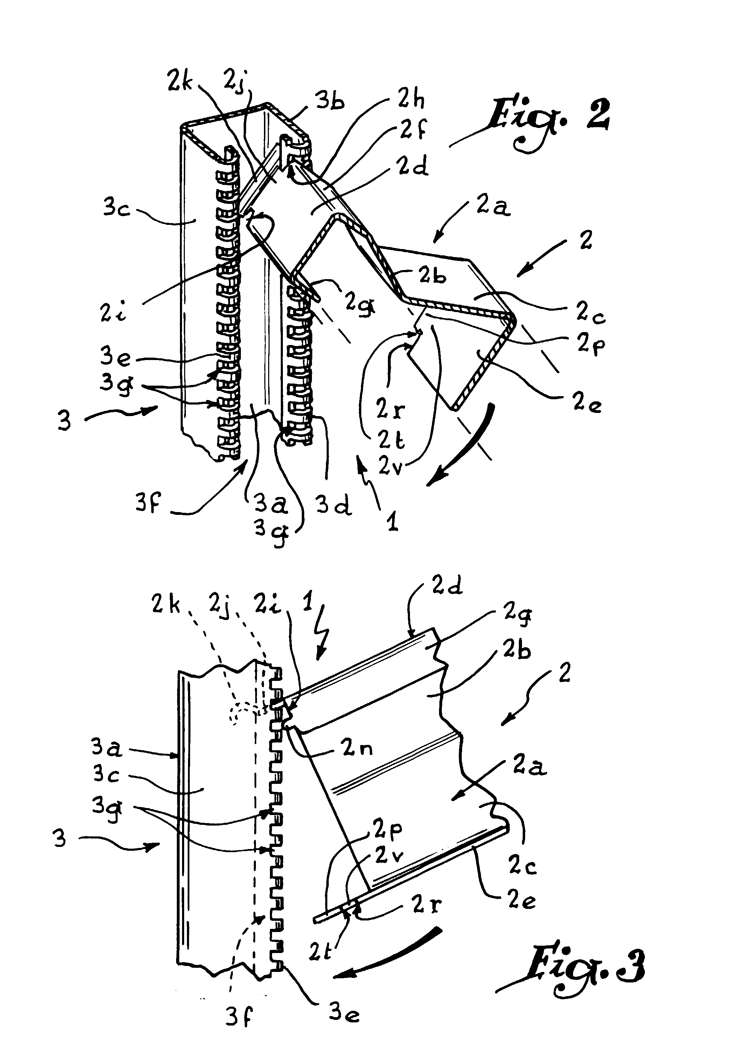

En fig. 2 et 3, on a représenté la mise en place d'une console 2 sur un montant 3.

On remarque que la console 2 doit être inclinée simultanément dans deux plans successifs par rapport au montant 3 pour pouvoir introduire la butée courbe 2k à l'intérieur de l'ouverture continue 3f. En effet, on présente une première extrémité de la butée courbe 2k à l'intérieur de l'ouverture 3f et on procède ensuite à son pivotement autour de son axe pour que l'autre extrémité vienne s'introduire à l'intérieur de ladite ouverture et dans la partie interne du montant 3.

On bascule ensuite la console 2 en direction du bas pour que le second moyen d'encliquetage et de retenue constitué par la patte 2p pénètre en force à l'intérieur de l'ouverture 3f en vue de l'immobilisation de la console 2.

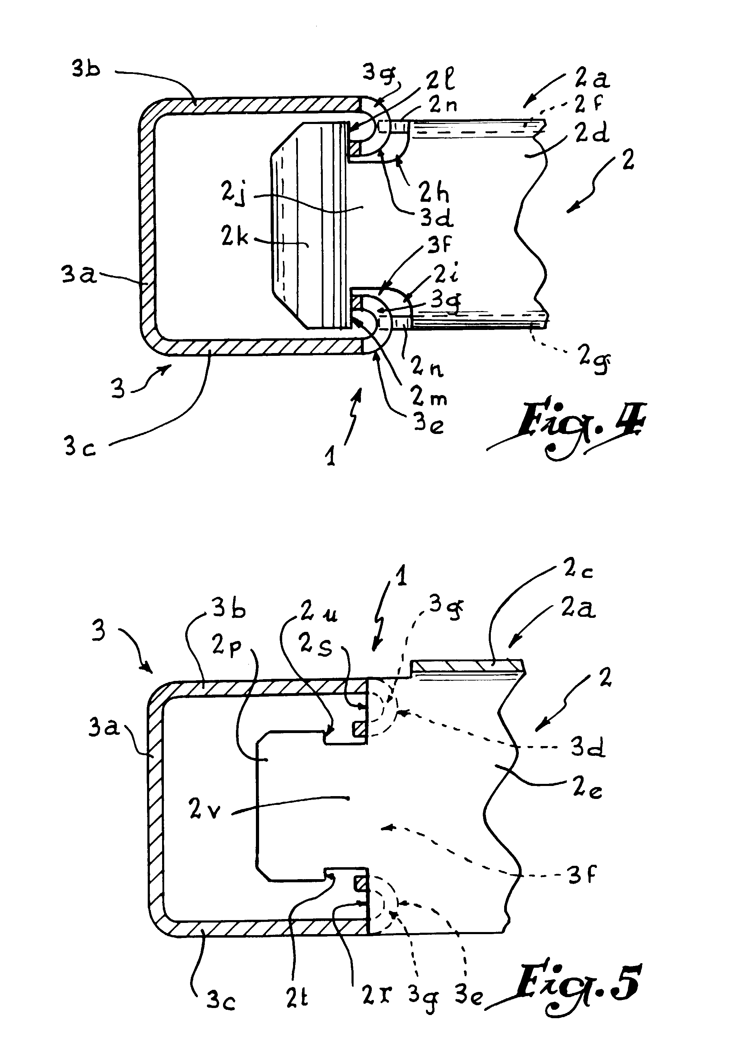

En fig. 4, on a montré le positionnement du premier moyen constitué par la butée courbe 2k à l'intérieur du montant 3. On note que les bords extrêmes 2l et 2m de la butée courbe 2k viennent prendre appui sur les extrémités libres et internes des bords à profil courbe 3d et 3e de chacune des ailes 3b et 3c tandis que les doigts de retenue 2n pénètrent chacun à l'intérieur d'une encoche 3g correspondante, se trouvant au même niveau.

En fig. 5, on a représenté la mise en place du second moyen d'encliquetage et de retenue constitué par la patte 2p à l'intérieur du montant 3. On remarque que la largeur de cette dernière, supérieure à celle de l'ouverture 3f, empêche la console 2 de se retirer du montant 3 puisque les faces 2t et 2u viennent prendre appui contre les extrémités libres et internes des bords à profils courbes 3d et 3e. En outre, la retenue verticale de la console 2 sur le montant 3 est assurée par les faces d'appui 2r et 2s qui pénètrent respectivement à l'intérieur d'une encoche 3g correspondante ménagée dans les bords à profil courbe 3d et 3e des ailes 3b et 3c.

On note que la distance entre les doigts de retenue 2n et l'aile inférieure 2e est un multiple de celles séparant deux encoches 3g d'un même bord à profil courbe du montant 3 (fig. 6).

En outre, on remarque que la largeur de la branche 2i et du segment 2v est légèrement inférieure à celle de l'ouverture 3f afin de permettre l'introduction inclinée de la console 2 à l'intérieur du montant 3. La branche 2i et le segment 2v permettent un maintien latéral de la console 2 à l'intérieur du montant 3 pusqu'ils viennent à proximité des bords à profil courbe 3d et 3e des ailes 3b et 3c.

On observe également que l'aile inférieure 2e est sensiblement plus large que l'aile supérieure 2d.

## Revendications

1. Dispositif pour la fixation d'une console sur un montant vertical pour la mise en place de chemins de câbles ou toutes autres canalisations en vue du transport d'énergie et de fluides, caractérisé en ce qu'il comprend un montant vertical (3) muni d'un fond (3a) qui se prolonge perpendiculairement par deux ailes (3b et 3c) parallèles l'une à l'autre dont les extrémités libres sont retournées en direction de l'intérieur du montant (3) pour constituer des bords à profil courbe (3d et 3e) délimitant une ouverture continue et verticale (3f), tandis que chaque bord à profil courbe (3d et 3e) est découpé pour présenter une série d'encoches parallèles (3g) formant une crémaillère sur toute la hauteur du montant (3) et au moins une console horizontale (2) qui comporte des moyens d'encliquetage et de retenue opposés (2k et 2p) qui coopèrent avec les bords à profil courbe (3d et 3e), les encoches (3g), et l'ouverture continue (3f) en vue de l'immobilisation de ladite console sur le montant vertical.

2. Dispositif de fixation suivant la revendication 1, caractérisé en ce que les encoches (3g) débouchent à l'intérieur du montant (3) et plus particulièrement dans le pli des bords à profil courbe (3d et 3e).

3. Dispositif de fixation suivant la revendication 1, caractérisé en ce que la largeur de l'ouverture continue (3f) est inférieure à celle des moyens d'encliquetage et de retenue (2k et 2p) de la console (2).

4. Dispositif de fixation suivant la revendication 1, caractérisé en ce que la console (2) comporte des ailes horizontales et parallèles l'une à l'autre (2d et 2e) qui se prolongent respectivement à l'une de leurs extrémités par les moyens d'encliquetage et de retenue (2k et 2p).

5. Dispositif de fixation suivant la revendication 4, caractérisé en ce que l'aile horizontale inférieure (2e) est sensiblement plus large que l'aile horizontale supérieure (2d).

6. Dispositif de fixation suivant la revendication 1, caractérisé en ce que le premier moyen d'encliquetage et de retenue est constitué d'une butée courbe (2k) disposée perpendiculairement à une branche (2j) formant le prolongement de l'aile (2d) et des doigts de retenue (2n) tournés en direction de ladite butée.

7. Dispositif de fixation suivant la revendication 6, caractérisé en ce que la distance séparant les doigts de retenue (2n) et l'aile inférieure (2e) de la console (2) est un multiple de celle prévu entre deux encoches (3g) d'un même bord à profil courbe du montant vertical (3).

8. Dispositif de fixation suivant la revendication 6, caractérisé en ce que l'aile horizontale (2d) est bordée latéralement par une portion verticale (2f) et un retour vertical (2g) solidaire chacun à proximité de la butée courbe (2k) d'un doigt de retenue (2n).

9. Dispositif de fixation suivant la revendication 1, caractérisé en ce que le second moyen de retenue est constitué d'une patte (2p) en forme de T se trouvant dans le prolongement d'un segment (2v) afin de délimiter deux faces d'appui (2r, 2s) qui sont opposées deux autres faces d'appui (2t et 2u).

## Patentansprüche

1. Vorrichtung zum Befestigen einer horizontalen Konsole an einer vertikalen Stütze zum Instellungbringen von Kabelwegen oder anderen Leitungen, die den Energie- oder Fluidtransport betreffen,
**dadurch gekennzeichnet**, daß sie eine vertikale Stütze (3) mit einem Boden (3a), der sich in senkrechter Weise durch zwei zueinander parallele Schenkel (3b und 3c) fortsetzt, deren freie Enden in die Richtung des Inneren der Stütze (3) zurückgeführt sind, um Ränder (3d und 3e) mit einem bogenförmigen Profil zu bilden, die eine durchgehende und vertikale Öffnung (3f) begrenzen, wobei jeder bogenförmige Rand (3d und 3e) eingeschnitten ist, um über die gesamte Höhe der Stütze eine Reihe von eine Zahnstange bildenden parallelen Kerben (3g) aufzuweisen, und mindestens eine horizontale Konsole (2) umfaßt, die gegenüberliegende Mittel zum Einrasten und zum Zurückhalten (2k und 2p) aufweist, die mit den bogenförmigen Rändern (3d und 3e), den Kerben (3g) und der durchgehenden Öffnung (3f) in bezug auf die Festlegung der Konsole auf der vertikalen Stütze zusammenarbeiten.

2. Vorrichtung nach Anspruch 1, dadurch gekennzeichnet, daß die Kerben (3g) ins Innere der Stütze (3) und genauer in den Bogen der bogenförmigen Ränder (3d und 3e) einmünden.

3. Vorrichtung nach Anspruch 1, dadurch gekennzeichnet, daß die Breite der durchgehenden Öffnung (3f) kleiner ist als die der Mittel zum Einrasten und zum Zurückhalten (2k und 2p) der Konsole (2).

4. Vorrichtung nach Anspruch 1, dadurch gekennzeichnet, daß die Konsole (2) horizontale und parallel zueinander liegende Schenkel (2d und 2e) aufweist, die jeweils an einem ihrer Enden in die Mittel zum Einrasten und zum Zurückhalten (2k und 2p) übergehen.

5. Vorrichtung nach Anspruch 4, dadurch gekennzeichnet, daß der untere horizontale Schenkel (2e) etwas breiter ist als der obere horizontale Schenkel (2d).

6. Vorrichtung nach Anspruch 1, dadurch gekennzeichnet, daß das erste Mittel zum Einrasten und zum Zurückhalten durch einen gekrümmten Anschlag (2k), der senkrecht zu einem die Verlängerung des Schenkels (2d) bildenden Abschnitt (2j) angeordnet ist, und durch Haltefinger (2n), die in Richtung des Anschlags gerichtet sind, gebildet wird.

7. Vorrichtung nach Anspruch 6, dadurch gekennzeichnet, daß der die Haltefinger (2n) und den unteren Schenkel (2e) der Konsole (2) trennende Abstand ein Vielfaches von dem Abstand ist, der zwischen zwei Kerben (3g) desselben bogenförmigen Randes der vertikalen Stütze (3) vorgesehen ist.

8. Vorrichtung nach Anspruch 6, dadurch gekennzeichnet, daß der horizontale Schenkel (2d) seitlich durch einen vertikalen Bereich (2f) und einen vertikalen Umschlag (2g) begrenzt ist, die jeweils in der Nähe des gekrümmten Anschlags (2k) als festen Bestandteil einen Haltefinger (2n) aufweisen.

9. Vorrichtung nach Anspruch 1, dadurch gekennzeichnet, daß das zweite Mittel zum Zurückhalten aus einer T-förmigen Lasche (2p) besteht, die sich in der Verlängerung eines Abschnitts (2v) befindet, um zwei Stützflächen (2r, 2s) zu begrenzen, die zwei anderen Stützflächen (2t und 2u) gegenüberliegen.

## Claims

1. An arrangement for the fixing of a bracket on a vertical stand for the placement of cable tracks or other channel members for the transport of energy and fluids, characterised in that it comprises a vertical stand (3) provided with a base (3a) which is extended perpendicularly by two mutually parallel flanks (3b and 3c) of which the free ends are turned over in the direction of the interior of the stand (3) in order to constitute curved profile rims (3d and 3e) delimiting a continuous vertical opening (3f), wherein each curved profile edge (3d and 3e) is indented in order to present a series of parallel notches (3g) forming a rack over the whole height of the stand (3) and at least one horizontal bracket (2) which comprises opposed joining and restraining means which cooperate with the curved profile rim (3d and 3e), the notches (3g) and the continuous opening (3f) so as to secure the said bracket on the vertical stand.

2. A fixing arrangement according to claim 1, characterised in that the notches (3g) run into the interior of the stand (3) and more particularly into the crease of the curved profile rims (3d and 3e).

3. A fixing arrangement according to claim 1, characterised in that the breadth of the continuous opening (3f) is less than that of the joining and restraining means (2k and 2g) of the bracket (2).

4. A fixing arrangement according to claim 1, characterised in that the bracket (2) comprise horizontal and mutually parallel flanks which are respectively extended at one of their ends by means of the joining and restraining means (2k and 2p).

5. A fixing arrangement according to claim 4, characterised in that the lower horizontal flank (2e) is substantially wider than the upper horizontal superior flank (2d).

6. A fixing arrangement according to claim 1, characterised in that the first joining and restraining means is constituted by a curved toe (2k) disposed perpendicularly to a branch (2j) forming the extension of the flank (2d) and retaining fingers (2n) turned in the direction of the said toe.

7. A fixing arrangement according to claim 6, characterised in that the distance separating the retaining fingers (2n) and the lower flank (2e) of the bracket (2) is a multiple of that provided between two notches (3g) of the same curved profile rim of the vertical stand (3).

8. A fixing arrangement according to claim 6, characterised in that the horizontal flank (2d) is laterally bordered by a vertical part (2f) and a fixed vertical flange (2g), each being fixed to a retaining finger (2n), close to the curved toe (2k).

9. A fixing arrangement according to claim 1, characterised in that the second retaining means is constituted by a tongue (2p) in the form of a T disposed in the extension of a segment (2v) whereby to delimit two engagement faces (2r and 2s) which confront two other engagement faces (2t and 2u).
